# EUROPEAN PATENT SPECIFICATION

(11) **EP 3 054 131 B1**
(45) Date of publication and mention of the grant of the patent: **10.01.2024**
(21) Application number: 14847686.4
(22) Date of filing: 24.04.2014
(51) Int. Cl.: F02N 11/04, F02D 11/10, B60W 10/06, B60W 10/08, B60W 30/18, B62M 7/00, B62K 23/02, H02M 7/219, B60L 50/15, B60W 20/13, B60W 50/14, B62K 11/00, F02D 41/00, F02N 11/08

(54) **IDLE STOP CONTROL DEVICE**
VORRICHTUNG ZUR LEERLAUFSTOPPSTEUERUNG
DISPOSITIF DE COMMANDE D'ARRÊT AU RALENTI

(30) Priority: 30.09.2013 JP 2013205984; 30.09.2013 JP 2013205985
(43) Date of publication of application: 10.08.2016
(73) Proprietor: Honda Motor Co., Ltd., Minato-ku Tokyo 107-8556 (JP)
(72) Inventor: OSAWA, Toshifumi, Wako-shi Saitama 351-0193 (JP); OSUKA, Takanori, Wako-shi Saitama 351-0193 (JP); TAKANO, Yuki, Wako-shi Saitama 351-0193 (JP); TAKEWAKA, Tomoyuki, Wako-shi Saitama 351-0193 (JP)
(74) Representative: Brevalex
(86) International application number: PCT/JP2014/061622
(87) International publication number: WO 2015/045464

(56) References cited:
- EP-A2- 0 740 393
- EP-A2- 0 753 924
- CN-A- 101 776 020
- DE-A1- 10 355 197
- FR-A1- 2 955 715
- JP-A- 2001 090 572
- JP-A- 2004 122 925
- JP-A- 2011 163 281
- JP-A- 2011 163 281
- JP-B1- 5 299 576
- US-A- 6 049 194
- US-A1- 2003 183 191

## Description

### Technical Field

The present invention relates to an idle stop control device, and more particularly, to an idle stop control device for stopping and restarting an engine under predetermined conditions.

### Background Art

Assuming that a vehicle stops temporarily for a traffic light or the like, there is conventionally known an idle stop control in which if predetermined stopping conditions are satisfied, an engine is stopped to reduce fuel consumption, and if a passenger operates the vehicle and restarting conditions are satisfied, the engine restarts by a starter. While the engine stops due to the idle stop, a dynamo connected to the engine also stops, but an electric component such as a lighting device is energized. Therefore, it is necessary to take a reduction state of a battery charge amount into account so that electricity supplied from an in-vehicle battery to the starter when the engine restarts is sufficiently secured.

Patent Literature 1 discloses an idle stop control device which detects a charge state of a battery during idle stop control, and automatically restarts an engine even if a passenger does not operate when a state of the vehicle is not suitable for idle stop control. According to the technique of Patent Literature 1, feedback control of the charge amount suitable of the battery charge amount is executed, and a drive circuit of a dynamo is obtuse angle controlled to increase a power generation amount after the engine restarts and until the battery charge state is restored.

Patent Literature 2 discloses an idle stop control device for a motorcycle including a TBW (throttle-by-wire) which drives a throttle valve by an actuator. According to this idle stop control device, when an engine restarts from its stopped state by idle stop control, output suppressing control to reduce an actual opening degree of the throttle valve with respect to a passenger's throttle operation is executed to prevent unintentional start while predetermined time after restart.

JP 2011 163281 also discloses an idle stop control device according to the preamble of the independent claim.

### Citation List

### Patent Literatures

Patent Literature 1: JP 2010-163879 A
Patent Literature 2: WO 2012/128021

### Summary of Invention

### Technical Problem

If control for increasing a power generation amount by obtuse angle control is executed, since an engine load is increased, output which is transmitted to drives wheels is relatively lowered. According to this, there is a possibility that a passenger cannot sense the same acceleration feeling even if the throttle opening is the same. In Patent Literature 1, however, influence exerted on drivability is not examined.

In the technique of Patent Literature 1, it is not considered to inform a passenger that control for increasing the power generation amount is being executed.

According to Patent Literature 2, although it is possible to prevent the vehicle from unintentionally starting by the output suppressing control of the engine, if the battery charge amount is insufficient, the power generation amount is increased to compensate the insufficient charge amount, and the engine load is increased. It is not considered this increase in the engine load relatively lowers the output which is transmitted to a driving wheel and there is a possibility that influence is exerted on drivability.

It is an object of the present invention to solve the problem of the conventional techniques, and to provide an idle stop control device capable of enhancing drivability after an engine restarts.

### Solution to Problems

To achieve the afore-mentioned object, the present invention has a first featureaccording to pending claim 1.

The present invention has a second feature in that said charge control means (46) carries out advance angle/obtuse angle control, and charging reinforcing control which increases the power generation amount of said dynamo (18) executes control for increasing a maximum obtuse angle as compared with normal power generation.

The present invention has a third feature in that an increasing ratio (C) of said maximum obtuse angle (Hmax) applied for said charging reinforcing control is set between 15 and 35% of a maximum obtuse angle (Umax) of normal power generation.

The present invention has a fourth feature in that when it is determined that stopping the engine by said idle stop control is not suitable based on the charge state detected by said charge state detecting means (41), a warning is given to the driver, and said charging reinforcing control and said output increasing control are executed.

According to a fifth feature not part of the claimed invention an idle stop control device comprising: a dynamo (18) for generating electricity by a rotation driving force of an engine (14); a battery (19) charged by generated electricity of said dynamo (18); charge control means (46) for increasing and reducing a power generation amount of said dynamo (18) in accordance with a charge state of said battery (19); idle stop control means (45) for stopping said engine (14a) if a predetermined engine stopping condition is satisfied, and for restarting said engine (14a) if a predetermined engine restarting condition is satisfied; charge state detecting means (41) for detecting the charge state of said battery (19); a throttle operating element (5) which is operated by a driver to adjust output of said engine (14a); and engine output control means (47) for controlling the output of said engine (14a) in accordance with an operation amount of said throttle operating element (5), in which if it is determined that stopping the engine by said idle stop control is not suitable based on the charge state detected by said charge state detecting means (41), said engine (14a) is automatically restarted, wherein said engine output control means (47); executes throttle valve driving suppressing control for reducing an opening degree of the throttle valve (63) with respect to an operation amount of said throttle operating element (5) more than usual until a predetermined condition is satisfied, when it is determined that stopping the engine by said idle stop control is not suitable and said engine (14a) is automatically restarted, and completes throttle valve driving suppressing control when said predetermined condition is satisfied, and executes charging reinforcing control for increasing the power generation amount of said dynamo (18) by said charge control means (46) and output increasing control for increasing the output of said engine (14a) more than usual with respect to the operation amount of said throttle operating element (5)

According to a sixth feature not part of the claimed invention in further comprising warning means (50) which automatically restarts said engine (14a) when it is determined that stopping the engine by said idle stop control is not suitable, and which gives a warning to a driver by means of a sound or lighting.

According to a seventh feature not part of the claimed invention, said predetermined condition is satisfied if predetermined time (T) is elapsed after said engine is restarted, and said throttle valve driving suppressing control includes output suppressing control which sets the opening degree of said throttle valve (63) smaller than the operation amount of said throttle operating element (5), and reduces the output of said engine (14a) more than usual.

According to a eighth feature not part of the claimed invention, said predetermined condition is satisfied if a rotation number of said engine (14a) reaches a predetermined rotation number of said engine (14a) before said engine (14a) spontaneously rotates by combustion thereof when said dynamo (18) is driven as a motor at the time of restart of said engine (14a), and said throttle valve driving suppressing control includes pumping loss reducing control which prevents said throttle valve (63) from opening irrespective of operation of said throttle operating element (5).

### Advantageous Effects of Invention

According to the first feature, engine output control means executes output increasing control for increasing the output of the engine more than usual with respect to the operation amount of the throttle operating element in response to executing charging reinforcing control for increasing the power generation amount of the dynamo by the charge control means. Therefore, output of the driving wheel according to a driver's will is obtained even during execution of the charging reinforcing control to increase the power generation amount. According to this, it is possible to maintain excellent drivability.

According to the second and third features, said charge control means carries out advance angle/obtuse angle control, and charging reinforcing control which increases the power generation amount of said dynamo executes control for increasing a maximum obtuse angle as compared with normal power generation, wherein an increasing ratio of the maximum obtuse angle applied for the charging reinforcing control is set between 15 and 35% of a maximum obtuse angle of normal power generation. Therefore, it is possible to swiftly and reliably perform the charging reinforcing control while the output increasing control is executed. In the case of normal power generation, it is possible to suppress excessive power generation to reduce a load, and to suppress the increase in output of the output increasing control. According to this, it is possible to expect that fuel economy is enhanced.

According to the fourth feature, when it is determined that stopping the engine by the idle stop control is not suitable based on a charge state detected by the charge state detecting means, a warning is given to the driver, and the charging reinforcing control and the output increasing control are executed. Therefore, the driver can recognize the control state by the warning. According to this, it is possible to accelerate the electric charge by the driver's throttle control, and to suppress fuel consumption.

According to the fifth feature, engine output control means executes throttle valve driving suppressing control for reducing an opening degree of the throttle valve with respect to an operation amount of the throttle operating element more than usual until a predetermined condition is satisfied, when it is determined that stopping the engine by the idle stop control is not suitable and the engine is automatically restarted, and completes throttle valve driving suppressing control when the predetermined condition is satisfied, and executes charging reinforcing control for increasing the power generation amount of the dynamo by the charge control means and output increasing control for increasing the output of the engine more than usual with respect to the operation amount of the throttle operating element. Therefore, at the time of restart of the engine caused by reduction in battery charge amount, it is possible to perform appropriate open/close control of the throttle valve which is suitable at the time of start irrespective of the driver's throttle operation. After the throttle valve driving suppressing control, the power generation amount is increased to compensate the battery charge amount, and the engine output is increased to deal with the increase in the engine load caused by the increase in the power generation amount. According to this, output of the driving wheel according to the driver's will can be obtained. According to this, it is possible to secure the battery charge amount and to maintain excellent drivability.

According to the sixth feature, the idle stop control device comprises warning means which automatically restarts the engine when it is determined that stopping the engine by the idle stop control is not suitable, and which gives a warning to a driver by means of a sound or lighting. Since this configuration warns the passenger that the battery power generation amount is reduced and the engine restarts, it is possible to prevent the passenger from operating the throttle without noticing the restart.

According to the seventh feature, the predetermined condition is satisfied if predetermined time is elapsed after the engine is restarted, the said throttle valve driving suppressing control includes output suppressing control which sets the opening degree of the throttle valve smaller than the operation amount of the throttle operating element, and reduces the output of the engine more than usual. Therefore, it is possible to easily set when the throttle valve drive suppressing control should be completed and when the charging reinforcing control and the output increasing control should be started, and it is possible to smoothly perform the output suppressing control when the engine is started.

According to the eighth feature, the predetermined condition is satisfied if a rotation number of the engine reaches a predetermined rotation number of the engine before the engine spontaneously rotates by combustion thereof when the dynamo is driven as a motor at the time of restart of the engine, and the throttle valve driving suppressing control includes pumping loss reducing control which prevents the throttle valve from opening irrespective of operation of the throttle operating element. Therefore, it is possible to reduce a pumping loss when the engine starts.

### Brief Description of Drawings

Fig. 1 is a left side view of a motorcycle to which an idle stop control device according to an embodiment of the present invention is applied.
Fig. 2 is a front view of the motorcycle.
Fig. 3 is a partial enlarged view around a steering handle of the motorcycle.
Fig. 4 is a front view of a meter unit.
Fig. 5 is a block diagram showing the idle stop control device and its peripheral configurations.
Fig. 6 is a circuit diagram of a control system of an ACG starter.
Fig 7 is a diagram for describing a principle of the obtuse angle control by the charging reinforcing control.
Fig. 8 is a flowchart showing a flow of battery-rising warning control.
Fig. 9 is a flowchart showing a flow of the battery-rising warning releasing control.
Fig. 10 is a flowchart showing a flow of the charging reinforcing control.
Fig. 11 is a diagram for describing a relation between a power generation load and power generation output.
Fig. 12 is a graph showing a relation between the power generation output and a phase angle.
Fig. 13 is a flowchart showing a procedure of throttle valve control at the time of restart, which is not part of the invention.
Fig. 14 is a graph showing variation of the throttle valve opening degree when the output suppressing control is executed, which is not part of the invention.
Fig. 15 is a flowchart showing a procedure of the engine restarting control caused in association with reduction in the battery charge amount, which is not part of the invention.

### Description of Embodiments

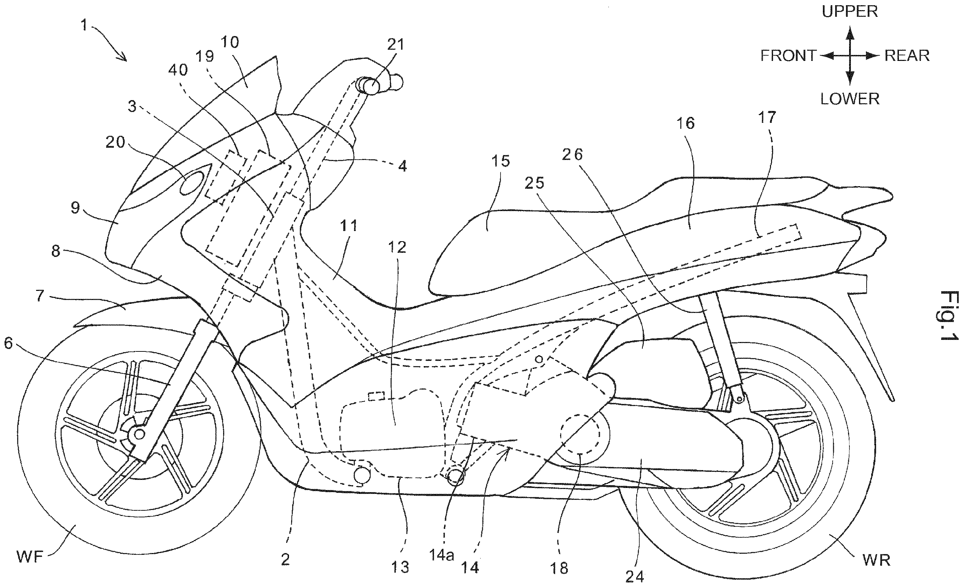

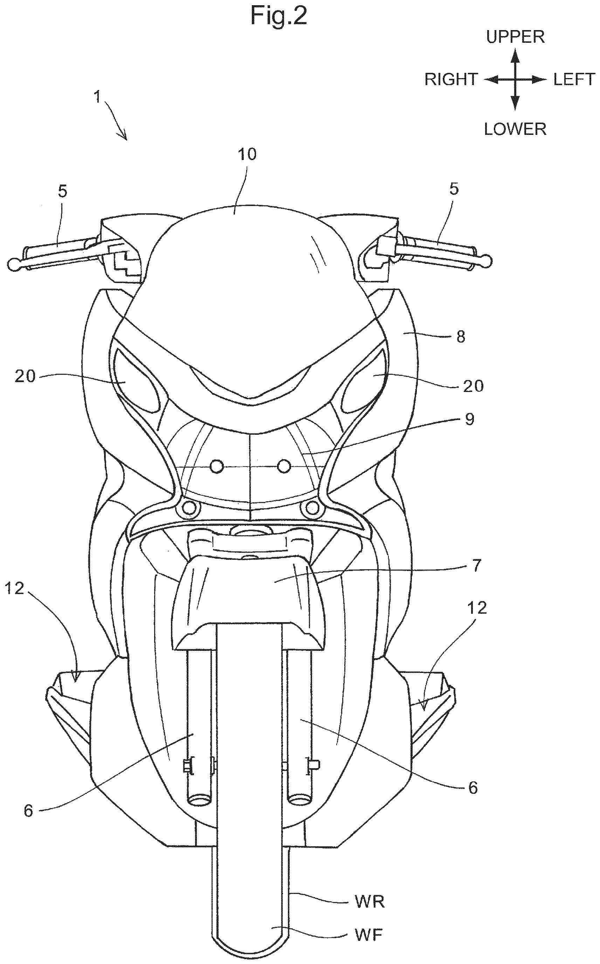

Hereinafter, a preferred embodiment of the present invention is described in detail with reference to the drawings. Fig. 1 is a left side view of a motorcycle 1 to which an idle stop control device according to an embodiment of the present invention is applied. Fig. 2 is a front view of the motorcycle 1.

The motorcycle 1 is a scooter-type vehicle provided with low floors 12 on which feet of a passenger are put. The low floors 12 are provided on right and left sides in a vehicle-width direction of a straddle section 11 extending in a longitudinal direction of a vehicle body. A head pipe 3 which turnably and pivotally supports a steering stem 4 is coupled to a front end of a vehicle body frame 2. A steering handle 21 extending in the vehicle-width direction is mounted on an upper portion of the steering stem 4. A pair of right and left front forks 6 which rotatably and pivotally supports a front wheel WF is mounted on a lower portion of the steering stem 4. A front fender 7 covering the front wheel WF is fixed to the front forks 6.

A battery 19 for supplying electric power to auxiliaries as an electric power load, and an ECU 40 for controlling an ignition device and a fuel injection device of an engine are placed in front of the head pipe 3. A headlight 9 and a windscreen 10 are mounted on a front cowl 8 which is formed to cover the battery 19 and the ECU 40. Winker devices 20 are placed in both ends of the headlight 9 in the vehicle-width direction.

A seat cowl 16 and a rear frame 17 which supports a seat 15 are coupled to a rear end of the vehicle body frame 2. A fuel tank 13 is placed to cover the vehicle body frame 2 from above in the straddle section 11. A unit swing-type power unit 14 on which a rear wheel WR is turnably and pivotally supported is mounted to a rear portion of the fuel tank 13. A front end of the power unit 14 is integrally provided with an engine 14a whose cylinders are oriented in the longitudinal direction of the vehicle body. A rear portion of the power unit 14 is integrally provided with a transmission case 24 in which a belt-type continuously variable transmission is provided. An air cleaner box 25 is mounted on an upper portion of the transmission case 24. The power unit 14 is swingably and pivotally supported on a front side of a rear frame 17, and is supported on a rear side of the rear frame 17 such that the power unit 14 is suspended from a rear shock suspension 26.

The power unit 14 of this embodiment includes an ACG starter 18 in which a starter for starting the engine 14a as a driving source and a dynamo for generating electricity by a rotation driving force of the engine 14a are integrally formed together. Configurations of the starter and the dynamo can variously be deformed, and the starter and the dynamo may separately be independent from each other for example. The ACG starter 18 may be used as an auxiliary motor, and it is also possible to configure a hybrid vehicle which uses an engine and a motor in conjunction when running.

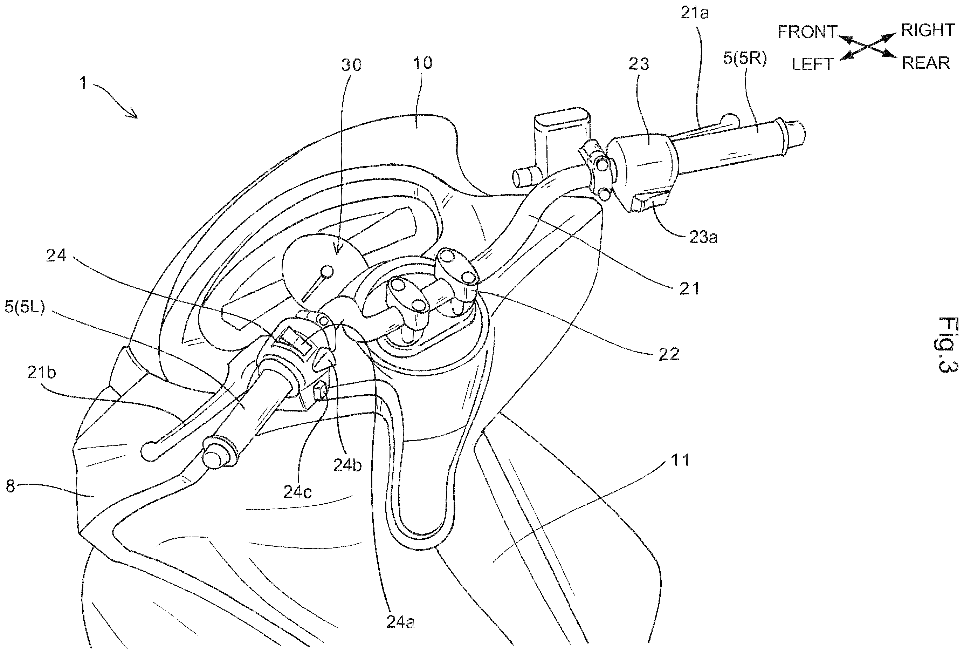

Fig. 3 is a partial enlarged view around the steering handle of the motorcycle 1. The steering handle 21 has such a configuration that handle grips 5 (5R, 5L), front and rear brake operation levers 21a, 21b, and switch boxes of the handle switches are respectively mounted on right and left ends of the handle bar. The steering handle 21 is fixed to a handle post 22 provided on an upper end of the steering stem 4 (see Fig. 1). The right handle grip 5R is a throttle grip as a throttle operating element, and is turnably mounted on the steering handle 21.

The right switch box 23 is provided with a starter switch 23a which starts the engine 14a. The left switch box 24 is provided with a switch 24a for switching between light axes of the headlight, a horn switch 24b, and a winker switch 24c for operating a winker device 20. A meter unit 30 provided with various kinds of meters is placed in front of the handle post 22 in terms of the vehicle body.

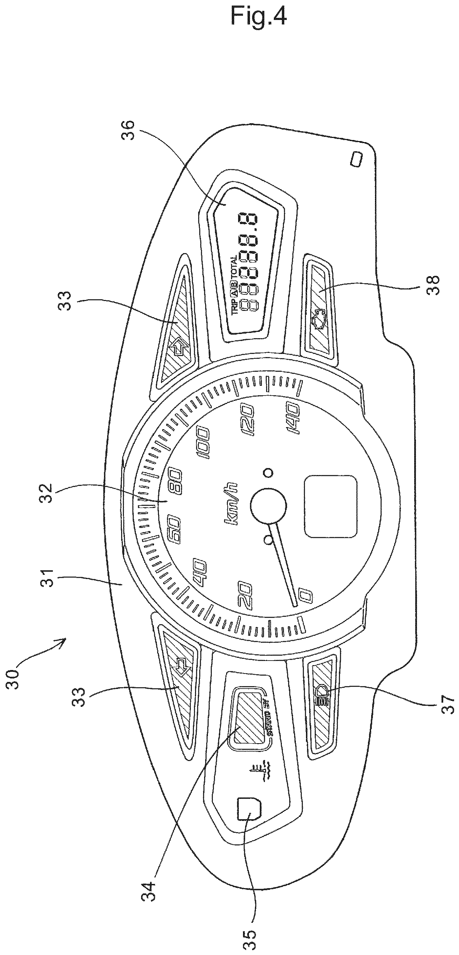

Fig. 4 is a front view of the meter unit 30. An analogue type speed meter 32 is placed substantially at a central portion of a housing 31, and winker operation lights 33 which lights when the winkers operates are placed on right and left sides of an upper portion of the speed meter 32. Digital type clock and distance meter 36 are placed on the right side of the speed meter 32. An operation button 35 for switching between display manners of the clock and distance meter 36 and resetting a tripmeter, and a standby lamp 34 which operates during idle stop control are provided on a left side of the speed meter 32. A headlight upward-display light 37 which lights when the headlight 9 is switched to high beam and an engine warning lamp 38 which lights in accordance with a state of the fuel injection device are respectively placed on right and left sides of a lower portion of the speed meter 32.

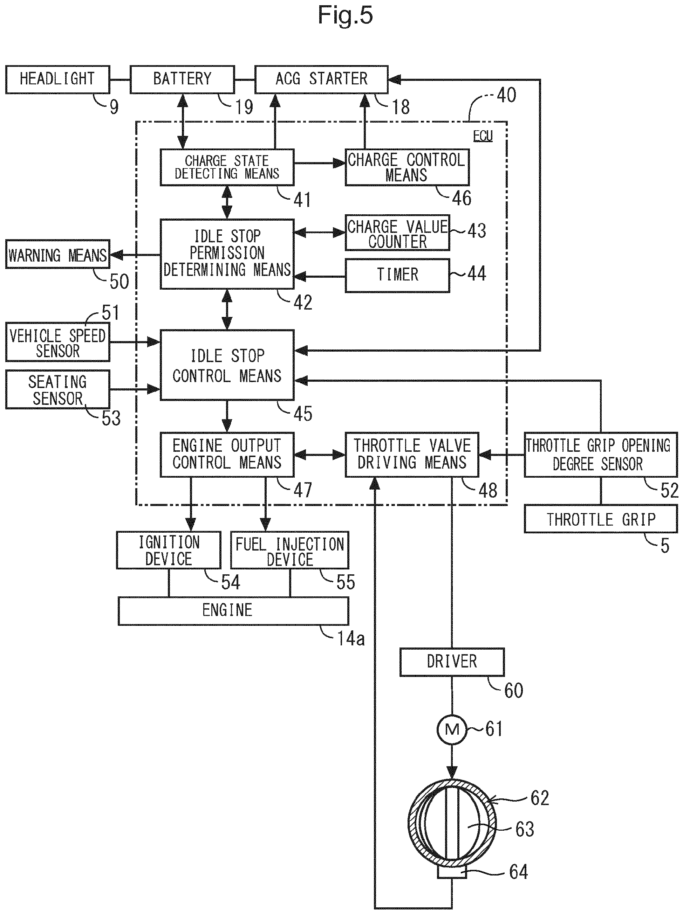

The standby lamp 34 functions as warning means 50 (see Fig. 5). The warning means 50 lights if predetermined conditions are satisfied during running and the idle stop control is started and thereafter, when discharge of the battery 19 progresses during the idle stop control, the warning means 50 is switched to blinking, thereby prompting a passenger to restart the engine. The lighting pattern of the standby lamp 34 can variously be changed.

Fig. 5 is a block diagram showing the idle stop control device of the embodiment of the present invention and its peripheral configurations. The ECU 40 includes idle stop control means 45 which executes the idle stop control by controlling the ignition device 54 and the fuel injection device 55 through engine output control means 47, the engine output control means 47, idle stop permission determining means 42 for determining whether idle stop control is suitable based on a charge state of the battery 19, charge state detecting means 41 for detecting the charge state of the battery 19, charge control means 46 for controlling a power generation amount of the ACG starter 18, and throttle valve driving means 48 for opening and closing a throttle valve 63 by an actuator.

Stop of the engine 14a by the idle stop control may be carried out only by stopping the fuel injection device 55. When the engine restarts from the idle stop state, electricity of the battery 19 is supplied to the ACG starter 18 by a command of the idle stop control means 45, the fuel injection device 55 and the ignition device 54 are driven by the engine output control means 47, and the throttle valve 63 is driven through the throttle valve driving means 48.

Information from a charge value counter 43 and a timer 44 is input to the idle stop permission determining means 42. Details of the charge value counter 43 and the timer 44 will be described later.

As described above, the idle stop control means 45 is set such that it stops the engine if predetermined conditions are satisfied, and the idle stop control means 45 automatically restarts the engine if a starting operation is detected during the idle stop control. Information from a vehicle speed sensor 51 which detects vehicle speed of the motorcycle 1, information from a throttle grip opening degree sensor 52 which detects an opening degree of the throttle grip 5, and information from a pressure-sensitive type seating sensor 53 which detects whether a passenger is sitting on the seat 15 are input to the idle stop control means 45. The predetermined conditions for starting the idle stop control can be set to such conditions that the vehicle speed is less than a predetermined value (e.g., 5 km/h), the throttle opening degree is less than a predetermined value (e.g., 5°) and a passenger is sitting. The restart condition of the engine 14a from the idle stop state can be set when the throttle grip opening degree exceeds a predetermined opening degree (e.g., 5°).

Since electricity is not generated by the ACG starter 18 during the idle stop control, it is considered that the discharge of the battery 19 progresses as execution time of the idle stop control elapses. For example, the headlight 9 of this embodiment always lights, and if the headlight 9 keeps lighting even during the idle stop control, discharge of the battery 19 progresses.

The warning means 50 can give a warning to prompt a passenger to restart the engine when the idle stop permission determining means 42 determines that the charge state of the battery 19 is not suitable for the idle stop control. In this embodiment, the standby lamp 34 (see Fig. 4) corresponds to this. The warning means 50 may be composed of a speaker which emits a sound, a vibrator which generates vibrations and the like, in addition to various kinds of lighting display means and liquid crystal display.

The idle stop control means 45 has a function to drive the ACG starter 18 and automatically restart the engine 14a when the charge state detecting means 41 determines the charge state of the battery 19 is not suitable for the idle stop control.

The charge control means 46 controls to adjust the power generation amount of the ACG starter 18. In this embodiment, when the battery charge amount is reduced, the charge control means 46 executes "charging reinforcing control" to increase the power generation amount for compensating the reduction of the battery charge amount as feedback control in accordance with the battery charge amount.

ATBW (throttle-by-wire) system which drives, by the actuator, the throttle valve 63 which adjusts an air intake amount is applied to the motorcycle 1 of the embodiment. The butterfly type throttle valve 63 which is pivotally supported in a throttle body 62 such that the throttle valve 63 can open and close is connected to a stepping motor 61 as an actuator which is turned by a drive signal from a driver 60.

A turning angle of the throttle valve 63 is detected by a throttle valve opening degree sensor 64. The throttle valve driving means 48 drives the driver 60 such that an appropriate throttle valve opening degree is obtained based on information such as the throttle grip opening degree, the engine rotation number, and the vehicle speed at the time of normal driving. A relation between the throttle valve opening degree and the three parameters composed of the throttle grip opening degree, the engine rotation number and the vehicle speed is defined in a predetermined three dimensional map or the like. That is, as the throttle valve opening degree, the same value is obtained if the three parameters are the same.

As described above, if the battery charge amount is reduced, the charging reinforcing control for increasing the power generation amount of the ACG starter 18 is executed, and the charging reinforcing control is executed if the charge control means 46 obtuse angle controls the drive circuit of the ACG starter 18. If the obtuse angle control is executed, the engine load is increased by the increase in the power generation load. Therefore, even if the vehicle is driven with the same throttle valve opening degree, output transmitted to the driving wheel becomes relatively small. That is, during execution of the charging reinforcing control, even if a passenger operates the throttle grip with the same opening degree, obtained acceleration feeling becomes small as compared with a case where the charging reinforcing control is not executed, and there is a possibility that the passenger feels variation in drivability.

In this embodiment, to prevent the drivability from being deteriorated, the throttle valve opening degree with respect to the throttle grip opening degree is increased during the charging reinforcing control, and the "output increasing control" to compensate the reduced output is executed. This output increasing control is realized by a command which is output from the engine output control means 47 to the throttle valve driving means 48.

When the engine starts due to insufficient charging, if a passenger tries to start the engine and opens the throttle grip immediately after the start of the engine without noticing that the engine is started, the engine rotation number is already increased. Therefore, the engine rotation is shifted to a high rotation side earlier than a case where the engine rotation number starts from 0, and it is considered that a driver has a feeling of strangeness in acceleration.

Hence, when the engine automatically restarts from the idle stop state, if the throttle grip is operated until predetermined time T is elapsed after the restart, the "output suppressing control" for suppressing the increase in the engine output is executed. This output suppression is realized by a command which is output from the engine output control means 47 to the throttle valve driving means 48.

According to this output suppressing control, even if the driver operates the throttle grip without noticing that the engine restarts, it is possible to restrain the driver from having a feeling of strangeness in acceleration. This control is shifted to the charging reinforcing control after specified time (e.g., two seconds, time during which driver sufficiently notices automatic starting) after the engine is automatically started.

When the engine is started from the engine stopped state, even if the driver operates the throttle grip in its opening direction, the pumping loss reducing control by which the throttle valve 63 is not opened without responding to not in accordance with the operation of the throttle grip in its opening direction is executed in a low rotation region (e.g., 500 rpm or lower) where the engine is driven by the ACG starter 18 and the engine is not brought into voluntary rotation by combustion after the engine is started. According to this, it is possible to reduce the pumping loss caused by air-induction at the time of rotation at which the engine is not brought into combustion, and a friction loss at the time of start can be reduced. This control for reducing the pumping loss at extremely low rotation when the engine is started is also executed when the engine 14a restarts from the idle stop state due to reduction of the battery charge amount. This control can also be realized by a command which is output from the engine output control means 47 to the throttle valve driving means 48.

If the above-described control operations are summarized, when the engine 14a restarts from the idle stop state due to reduction in the battery charge amount, the idle stop control device of the embodiment executes the charging reinforcing control for compensating the battery charge amount and the output increasing control for increasing the engine output, and the idle stop control device executes the throttle valve driving suppressing control for reducing, smaller than usual, the opening degree of the throttle valve 63 with respect to the operation amount of the throttle grip 5. This valve driving includes the "output suppressing control" for suppressing the increase in the output immediately after the engine restarts, and the "pumping loss reducing control" for reducing the friction at the time of start.

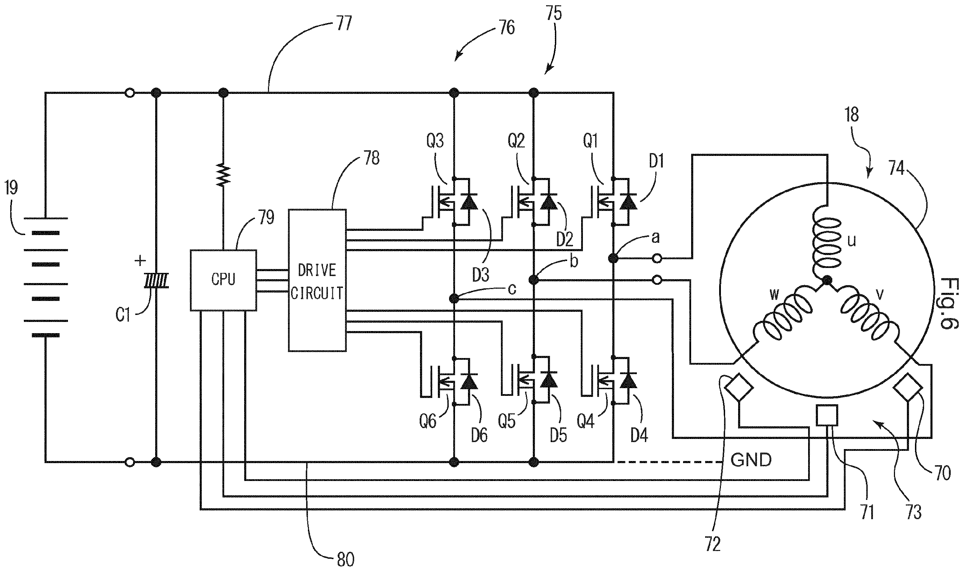

Fig. 6 is a circuit diagram of a control system of the ACG starter 18. The ACG starter 18 is a three-phase blushless motor. The ACG starter 18 includes a stator 74, and a rotor (not shown) which is opposed to the stator 74 and which rotates on the side of an outer periphery of the stator 74. Three-phase stator windings U, V, and W are wound around the stator 74. A rotor sensor 73 including three Hall elements 70, 71 and 72 placed at 30° intervals from one another is provided around the rotor.

An output control unit 76 is provided with a DC-AC converter (inverter circuit) 75. The DC-AC converter 75 includes MOS-FETs (simply FETs, hereinafter) Q1, Q2, Q3, Q4, Q5 and Q6 respectively corresponding to the stator coils U, V and W. The FETs Q1 to Q6 are provided with diodes D1 to D6 in parallel.

The FETs Q1 and Q4 are connected to each other in series, and their connection a is connected to the stator coil U. Similarly, the FETs Q2 and Q5 are connected to each other in series, and their connection b is connected to the stator coil W, and the FETs Q3 and Q6 are connected to each other in series, and their connection c is connected to the stator coil V.

Gates of the FETs Q1 to Q6 are connected to a drive circuit 78. The drive circuit 78 determines energization timing of the FETs Q1 to Q6 based on detection signals of the Hall elements 70, 71 and 72, and determines energization duty (ON time/(ON time + OFF time) in accordance with required electricity or a required load. The drive circuit 78 controls the FETs Q1 to Q6 by energization timing and duty determined by a CPU 79.

The battery 19 as a power supply is connected between a power line 77 and a ground line 80 of an output control unit 76. A capacitor C1 smoothens three-phase AC generated between the power line 77 and the ground line 80 when the ACG starter 18 is operated as a dynamo. A CPU 67 has a function to measure electric potential between the stator coils U, V and W and the ground line 80, and electric potential between the stator coils.

The charge control means 46 (see Fig. 5) sends a command to a drive circuit 78, thereby controlling energization timing of the FETs. According to this, it is possible to adjust the power generation amount of the ACG starter 18. When charging reinforcing control is executed, the power generation amount is increased by obtuse angle controlling the FETs.

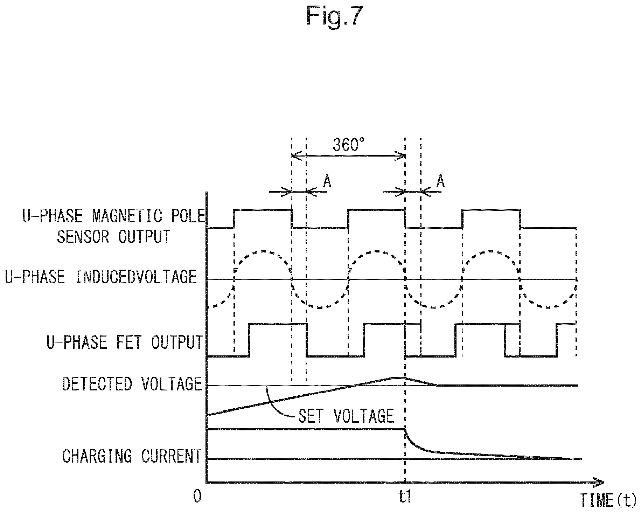

Fig. 7 is a diagram for describing a principle of the obtuse angle control in the charging reinforcing control. Fig. 7 shows U-phase magnetic pole sensor output, U-phase induced voltage, U-phase FET output, set voltage, and charging current from above in this order.

At time t = 0, the obtuse angle control by charging reinforcing control is started, and detected voltage is increasing. This is because U-phase FET output is made to fall at timing delayed by a period A after a falling pulse of the U-phase magnetic pole sensor is input, i.e., because obtuse angle control for moving a phase of the U-phase FET output toward obtuse side is executed. The charging reinforcing control is executed until the charge amount of the battery 19 reaches a defined value with the obtuse angle control.

At time t1, the charge amount of the battery 19 reaches the defined value and with this, the obtuse angle control is completed and the control for returning the control to the normal power generation control is executed. This control is carried out by falling the U-phase FET output in accordance with a falling pulse of the U-phase magnetic pole sensor, i.e., by moving the phase of the U-phase FET output toward the advance angle side. As the control is returned to the normal power generation control, charging current is lowered toward a standard value.

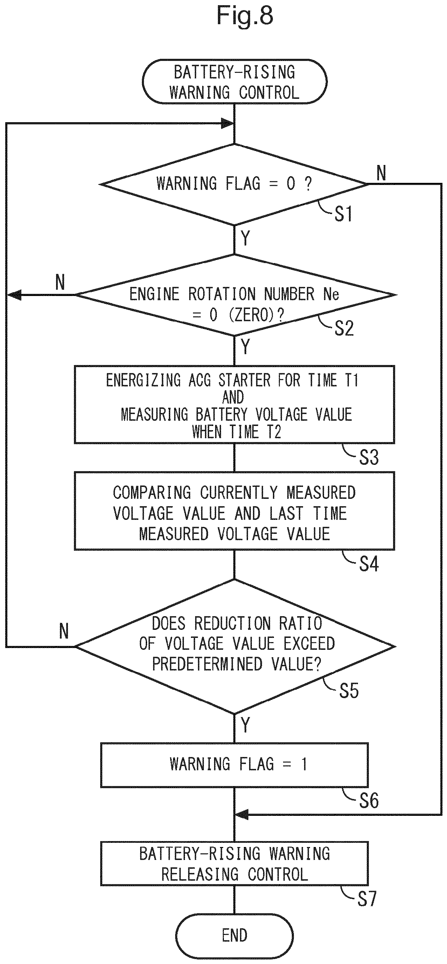

Fig. 8 is a flowchart showing a flow of battery-rising warning control. As described above, the idle stop control device of this embodiment includes the warning means 50. The warning means 50 lights when the predetermined conditions are satisfied during running and the idle stop control is started and thereafter, the warning means 50 is switched from lighting to blinking when the discharge of the battery 19 progresses during the idle stop control, thereby prompting a driver to restart the engine.

In step S 1, it is determined whether a warning flag is 0, and if YES, the procedure proceeds to step S2. In step S2, it is determined whether the engine rotation number Ne = 0 (zero), and if YES, the procedure proceeds step S3. Determination in step S1 is executed only when a main switch of the vehicle is ON.

In step S3, the charge state detecting means 41 energizes the ACG starter 18 for time t1 (e.g., 20 msec), and measures a battery voltage value when time t2 (e.g., 15 msec) is elapsed. According to this, it is possible to detect the charge state of the battery 19 using a more practical voltage measurement value by measuring a voltage value in a state where the ACG starter 18 is energized, i.e., a load voltage value. It is possible to energize the ACG starter 18 such that the ACG starter 18 rotates in a normal rotating direction of the engine (crankshaft) or a direction opposite from the normal rotating direction. The energization time is set to such short time that the ACG starter 18 does not start rotating. According to this, an operation sound of the motor is not generated, and it is possible to maintain silence during the idle stop control.

In next step S4, a voltage value which is measured currently and a voltage value which was measured last time are compared with each other. In step S5, it is determined whether a reduction ratio of a voltage value exceeds a predetermined value (e.g., 1%). If YES in step S5, the procedure proceeds step S6, and a warning determining flag is switched from 0 (zero) to 1. If NO in steps S2 and S5, the procedure is returned to determination in step S 1.

That is, in this embodiment, the reduction ratio of the battery voltage during the idle stop control is measured every constant time (e.g., one minute), and if the reduction degree of the measured voltage exceeds a predetermined value, it is determined that the battery 19 is not suitable for the idle stop control. In step S7, the control is shifted to battery-rising measuring releasing control, and the series of control operations is completed. If NO in step S1, the control is shifted to battery-rising warning releasing control as it is.

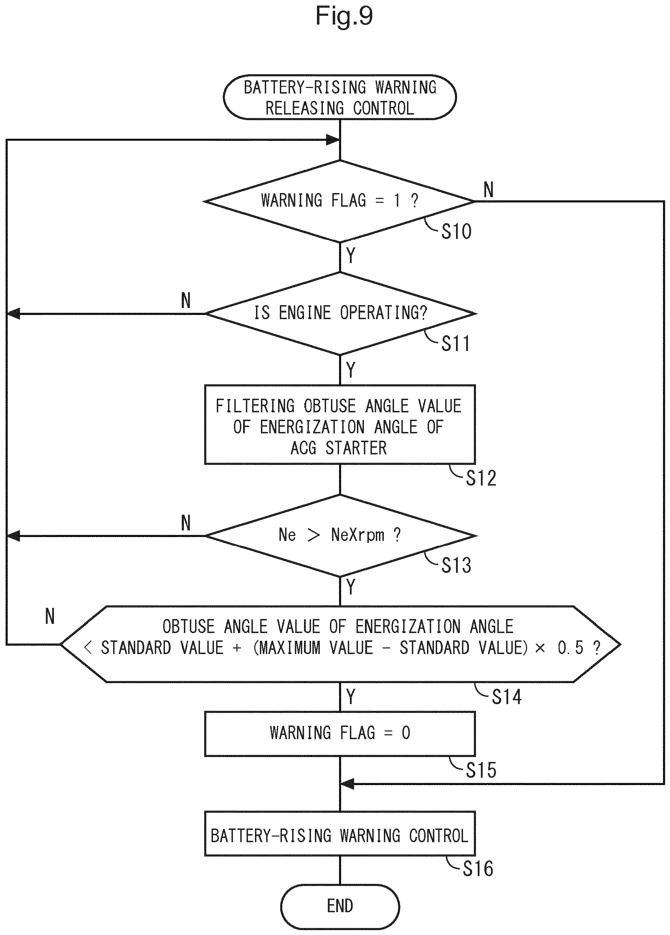

Fig. 9 is a flowchart showing a flow of the battery-rising warning releasing control. This flowchart shows a flow in which the warning flag is changed from 1 shown in Fig. 8 to 0, and execution of the idle stop control is again permitted. In this embodiment, a restoring degree of the charge state of the battery 19 is estimated and detected based on variation in an obtuse angle value when power generation control of the ACG starter 18 is carried out.

In step S10, it is determined whether the warning flag is 1, and if YES, the procedure proceeds step S11, and it is determined whether the engine is operating. If YES in step S12, the obtuse angle value of energization angle of the ACG starter 18 is subjected to filtering processing.

As described above, the obtuse angle value of the energization angle is a value to adjust the power generation output of the ACG starter 18. For example, when the rotation speed is the same, a power generation amount is increased if the obtuse angle value is increased, and the power generation amount is reduced if the obtuse angle value is reduced. In this embodiment, while the dynamo is operating, feedback control is carried out so that the obtuse angle value becomes an appropriate value in accordance with the charge state of the battery, but if the charge amount of the battery 19 becomes equal to or lower than a predetermined value, the obtuse angle value is set to the maximum value and thereafter, the control is switched to the feedback control while reducing the obtuse angle value as time is elapsed. The filtering processing in step S12 is for eliminating influence of an intermittent load applied to the ACG starter by removing high frequency component by sending a detection signal of the obtuse angle value through a lowpass filter.

In step S 13, it is determined whether the engine rotation number Ne exceeds a predetermined value NeX (e.g., 3000 rpm). The engine rotation number NeX applied to this determination can appropriately be changed in accordance with engine characteristics or power generation characteristics of the ACG starter 18. If YES in step S13, procedure proceeds to step S14.

In step S14, it is determined whether the obtuse angle value of the energization angle becomes lower than a value calculated by a standard value + (maximum value - standard value) × 0.5, i.e., an intermediate value between the standard value and the maximum value. In the determination in steps S13 and S14, it is determined that the charge state of the battery 19 is sufficiently restored in a state where the engine rotation number Ne exceeds the predetermined value NeX and based on a fact that the obtuse angle value of the energization angle becomes lower than the intermediate value.

If YES in step S14, the procedure proceeds step S15, and the warning flag is set to zero. In next step S16, the control is shifted to battery-rising warning control shown in Fig. 8, and the series of control operations is completed. If NO in step S10, the procedure proceeds to step S16 as it is. If NO in steps S11, S13 and S14, the procedure returns to determination in step S10.

The battery-rising warning releasing control can also be executed based on the rotation state of the engine which is detected using the charge value counter 43 and the timer 44 shown in Fig. 5. In this case, the charge value counter 43 is set such that it is incremented or decremented every one second, the charge value counter 43 is incremented when the engine rotation number Ne exceeds the predetermined value, and the charge value counter 43 is decremented when the engine rotation number is equal to or less than the predetermined value. According to this, a counter value of the charge value counter 43 keeps increasing every one second while a state where the engine rotation number Ne exceeds the predetermined value continues, and when the counter value exceeds a set value, it can be determined that the battery 19 is sufficiently charged.

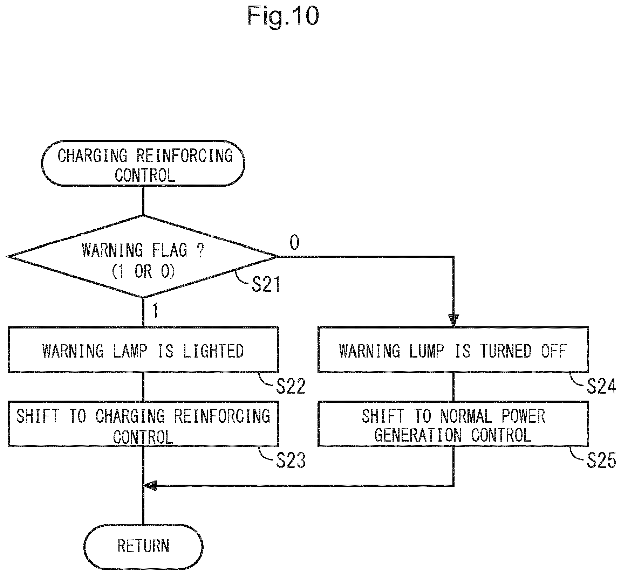

Fig. 10 is a flowchart showing a flow of the charging reinforcing control. In step S21, it is determined whether the warning flag is 1 or 0. If it is determined that the warning flag is 1, the procedure proceeds to step S22, the warning lamp (standby lamp 34) is made to light, the control is shifted to the charging reinforcing control in next step S23, and the series of control operations is completed. The warning lamp shown in step S22 can be replaced by other display means included in the warning means 50.

If it is determined that the warning flag is 0 in step S21, the procedure proceeds to step S24 and the warning lamp is turned off. In next step S25, the control is shifted to the normal power generation control, and the series of control operation is completed.

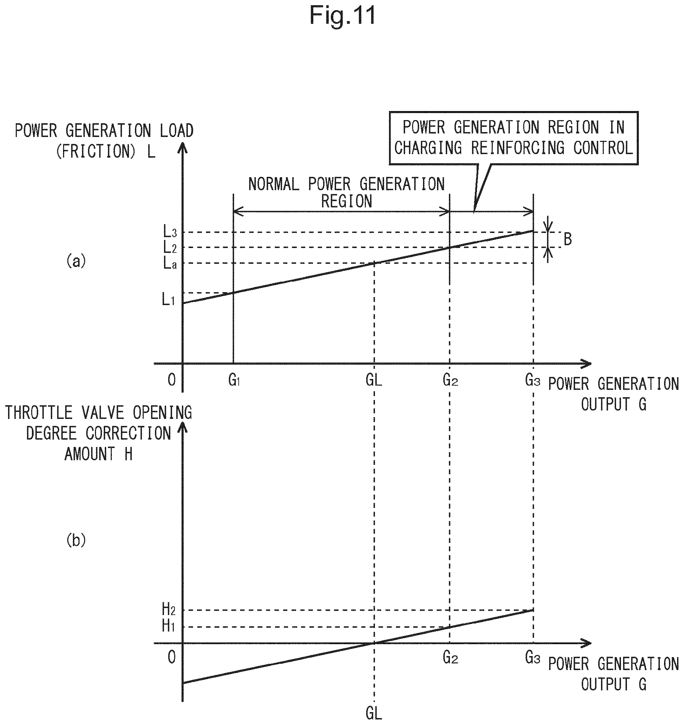

Fig. 11 is a diagram for describing a relation between a power generation load and power generation output. As shown in Fig. 11(a), the power generation load L and the power generation output G are in a proportional relation. The power generation load L in a normal power generation region is in a range of power generation loads L1 to L2 with the normal load La sandwiched therebetween. The power generation output G falls within a range of power generation loads G1 to G2 with power generation output GL and the power generation output GL corresponds to the normal load La.

On the other hand, when the battery charge amount is reduced and the charge control means 46 (see Fig. 5) executes the charging reinforcing control, the range of the power generation output G is enlarged to power generation output G3 which is greater than the power generation output G2. According to this, a difference B between the power generation loads L3 and L2 is added as the engine load, and influence is exerted on the drivability as described above.

On the other hand, as shown in Fig. 1 1(b), a proportional relation is established also between power generation output G and a throttle valve opening degree correction amount H when the throttle valve opening degree is constant (e.g., 10°), and these elements are set such that when the opening degree correction amount H is 0 (zero), the power generation output G becomes equal to the power generation output GL which corresponds to the normal load La. The opening degree correction amount H is zero when the vehicle is driven with the normal load La, and plus and minus feedback control with respect to the normal load La is executed in the normal power generation region. With respect to this, the opening degree correction amount H exceeds H1 and is permitted up to the range of H2 during the charging reinforcing control. Both Figs. 11(a) and 11(b) show an example when the engine rotation number Ne is fixed (e.g., 3,000 rpm), and a relation between an actual power generation load and the power generation output is varied in accordance with the engine rotation number.

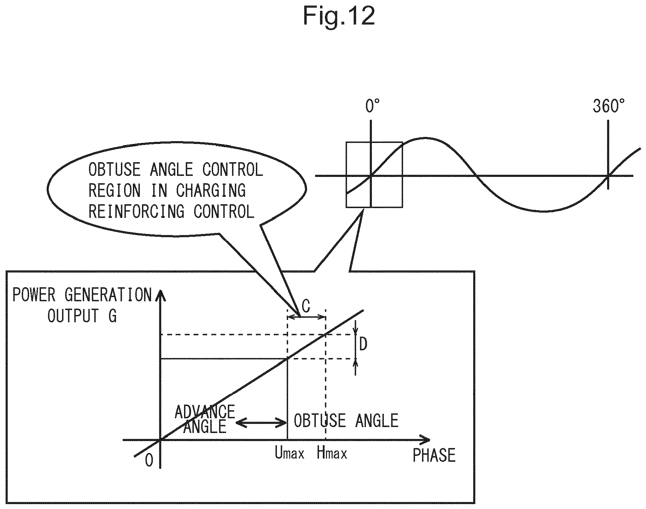

Fig. 12 is a graph showing a relation between the power generation output and a phase angle. With reference to an enlarged diagram in which a portion of induced voltage generated by power generation of the ACG starter 18 is cut away, if an advance angle value is varied in an advance angle direction or an obtuse angle direction, along with this, the power generation output G is varied straightly. The charge control means 46 (see Fig. 5) adjusts the power generation output (power generation amount) by the variation of the advance angle value. In the example of this drawing, it is possible to move a phase value to a phase max (e.g., 20°) in the obtuse angle direction to increase the power generation amount. By this obtuse angle control, a maximum obtuse angle Hmax in a power generation region during the charging reinforcing control is increased by an increasing ratio C at a maximum (e.g., 25%, it can arbitrary be set between 15 to 35%) with respect to a maximum obtuse angle Umax in a normal power generation region, and the power generation electricity G is charged and reinforced by an increasing amount D at a maximum.

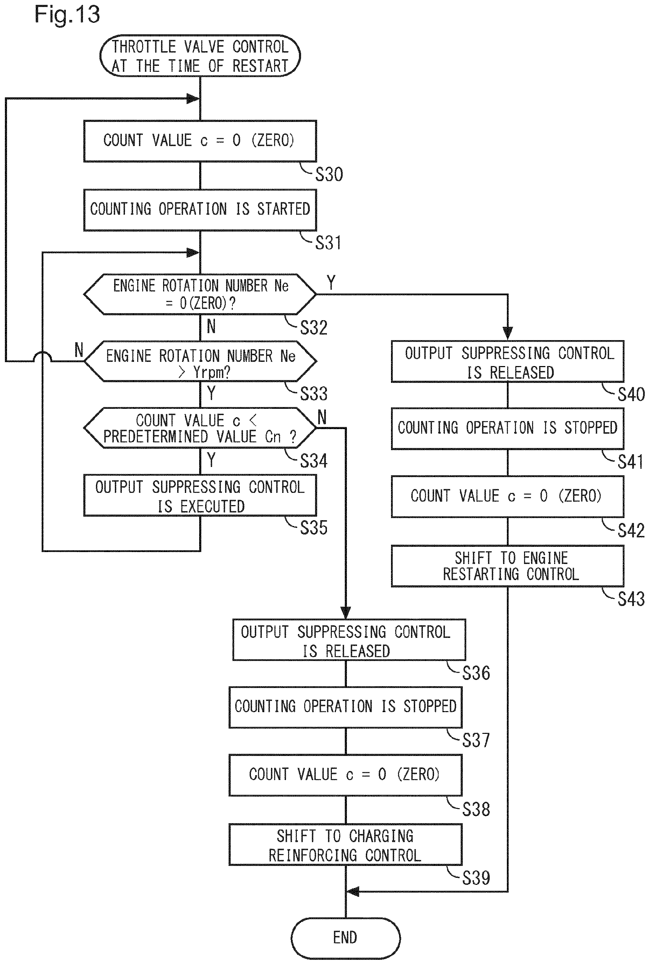

Fig. 13 is a flowchart showing a procedure of the throttle valve control (throttle valve control at the time of restart) when the engine restarts in connection with reduction in battery charge amount. In step S30, a count value of the counter is reset to zero. In step S31, a counting operation carried out by the counter is started. In step S32, it is determined whether the engine rotation number Ne is zero.

If YES in step S32, it is determined in step S33 whether the engine rotation number Ne (rpm) exceeds a predetermined rotation number NeY. The predetermined rotation number NeY is set to 900 rpm which is slightly lower than an idle rotation number for example. This is set as a rotation number at which it can be expected that ignition continues, the engine is actuated and it is continuously rotating.

If YES in step S33, the procedure proceeds to step S34, and it is determined whether the count value c is less than a predetermined value Cn (e.g., 2 seconds). If YES in step S34, output suppressing control is executed in step S35, and the procedure returns to determination in step S32. If NO in step S33, the procedure returns to step S30.

If NO in step S34, i.e., if it is determined that the count value c is equal to or greater than the predetermined value Cn, the output suppressing control is released in step S36. In next step S37, the counting operation carried out by the counter is stopped, and the count value c is reset in step S38. In step S39, the control is shifted to the charging reinforcing control (see flowchart in Fig. 10), and the series of control operations is completed.

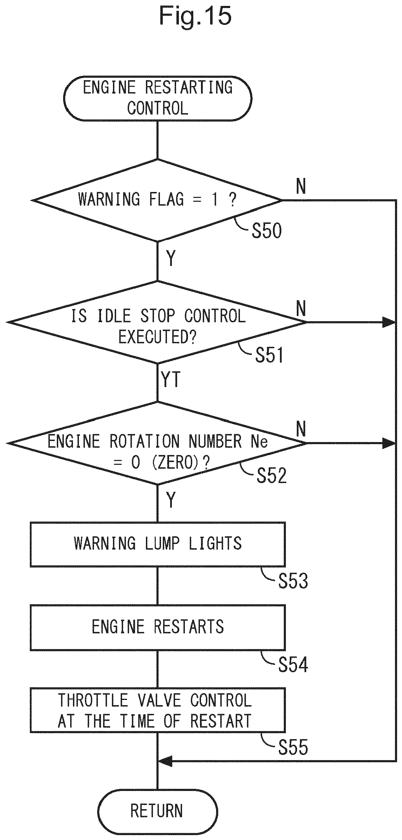

If YES in step S32 on the other hand, the procedure proceeds to step S40, and the output suppressing control is released. In next step S41, the counting operation carried out by the counter is stopped, and the counter value is reset in step S42. In step S43, the control is shifted to engine restarting control (see flowchart in Fig. 15), and the series of control operations is completed.

Fig. 15 is a flowchart showing a procedure of the engine restarting control caused in association with reduction in the battery charge amount. In step S50, it is determined whether the warning flag is 1, and if YES, the procedure proceeds to step S51. In step S51, it is determined whether idle stop control is being executed, and if YES, the procedure proceeds to step S52. In step S52, it is determined whether the engine rotation number Ne is 0.

If YES in step S52, i.e., if it is determined that the engine stops, the warning lamp lights in step S53, and the engine restarts in step S54. In step S55, the throttle valve control at the time of restart (see flowchart in Fig. 13) caused in association with the restart of the engine is executed, and the series of control operations is completed. If NO in steps S50, S51 and S52, the procedure skips steps S53, S54 and S55, and returns to the original procedure.

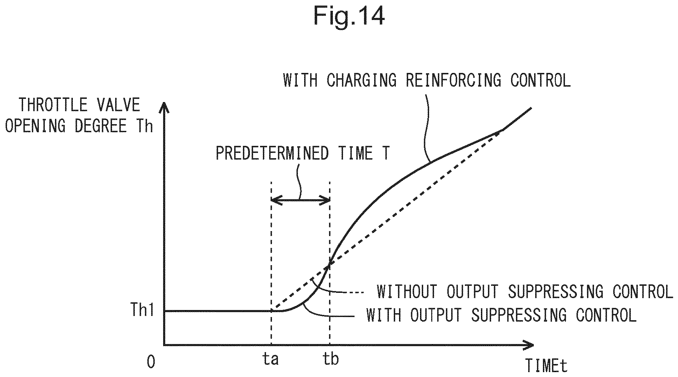

Fig. 14 is a graph showing variation of the throttle valve opening degree when the output suppressing control is executed. At time t = 0, the idle operation is executed in association with the engine restart caused in association with reduction in the battery charge amount. At this time, the opening degree of the throttle valve 63 is a predetermined idle operation opening degree Th1 based on a driving command of the throttle valve driving means 48, and the opening degree of the throttle grip 5 operated by a passenger is zero. That is, the current state of the vehicle is before the restarting operation is carried out by the passenger. In this state, even if the warning lamp operates, it is considered that the passenger does not yet notice the restart of the engine.

At time ta, the opening operation of the throttle grip 5 by the passenger is started. In the example of Fig. 14, the throttle grip 5 is operated such that the opening degree thereof becomes greater in proportional with elapsed time. At this time, the idle stop control device of this embodiment executes the output suppressing control by the engine output control means 47 until predetermined time T is elapsed after the operation of the throttle grip 5 is started. According to this, when the vehicle is normally operated, the throttle valve opening degree Th straightly increases (broken line in Fig. 14) with respect to the operation amount of the throttle grip 5, but according to this output suppressing control, the throttle valve opening degree Th is made smaller than the throttle grip opening degree (solid line in Fig. 14) and this configuration suppresses the engine output and prevents the vehicle from unintentionally starting.

In this embodiment, the charging reinforcing control for increasing the power generation amount of the ACG starter 18 is executed as the predetermined time T is elapsed. Therefore, to handle with reduction of the output of the driving wheel caused in association with the charging reinforcing control, the output increasing control for increasing the throttle valve opening degree Th with respect to the throttle grip opening degree is started. That is, at time tb at which the predetermined time T is elapsed from time ta, the output suppressing control is completed, and the charging reinforcing control and the output increasing control are started. The output increasing control is executed in an inextricable relation with the charging reinforcing control, a correction amount of the throttle valve opening degree gradually becomes smaller in association with increase in the battery charge amount, and the output increasing control is completed as the charging reinforcing control is completed.

A type of the motorcycle, a configuration of the idle stop control device, a throttle grip angle which becomes an execution starting trigger of the output suppressing control, predetermined time at which the output suppressing control is executed, and magnitude of output which is reduced by the output suppressing control are not limited to those described in the above-described embodiment, and can variously be changed. The idle stop control device of the present invention is not limited to the motorcycle, and can be applied to various kinds of vehicles such as a saddle type three-wheel vehicle.

### Reference Signs List

- 1: motorcycle,
- 5: throttle grip (throttle operating element),
- 9: headlight,
- 14: power unit,
- 14a: engine,
- 18: ACG starter (starter/dynamo),
- 19: battery,
- 30: meter unit,
- 34: standby lamp (warning means),
- 40: ECU,
- 41: charge state detecting means,
- 42: idle stop permission determining means,
- 43: charge value counter,
- 44: timer,
- 45: idle stop control means,
- 46: charge control means,
- 47: engine output control means,
- 48: throttle valve driving means,
- 50: warning means,
- 52: throttle grip opening degree sensor,
- 54: ignition device,
- 55: fuel injection device,
- 62: throttle body,
- 63: throttle valve,
- 64: throttle valve opening degree sensor

## Claims

1. An idle stop control device comprising:
a dynamo (18) for generating electricity by a rotation driving force of an engine (14);
a battery (19) charged by generated electricity of said dynamo (18);
charge control means (46) for increasing and reducing a power generation amount of said dynamo (18) in accordance with a charge state of said battery (19);
idle stop control means (45) for stopping said engine (14a) if a predetermined engine stopping condition is satisfied;
charge state detecting means (41) for detecting said charge state of said battery (19);
wherein, if it is determined that stopping the engine by said idle stop control is not suitable based on the charge state detected by said charge state detecting means (41), the power generation amount of said dynamo (18) is increased by said charge control means (46) in a charging reinforcing control,
**characterised in that**
said dynamo (18) is a three-phase brushless motor, having an output control unit (76) provided with a DC-AC converter (75) including MOS-FETs (Q1-Q6) controlled via a drive circuit (78), and
wherein, in said charging reinforcing control, said charge control means (46) is controlling the energization timings of the MOS-FETs (Q1-Q6) with said drive circuit (78) of said dynamo (18) by retarding the phase angles of the DC-AC converter compared to normal operation,
said idle stop control device further comprising :
a throttle operating element (5) which is operated by a driver to adjust output of said engine (14a); and
engine output control means (47) for controlling said output of said engine (14a) in accordance with an operation amount of said throttle operating element (5), in which
said engine output control means (47) executes output increasing control for compensating the reduced output during said charging reinforcing control by increasing an opening degree of the throttle valve (63) more than usual with respect to the operation amount of said throttle operating element (5) in order to prevent the drivability from being deteriorated in response to executing charging reinforcing control for increasing the power generation amount of the dynamo by said charge control means (46),
wherein said output increasing control is executed in relation with said charging reinforcing control, a correction amount of said throttle valve opening degree gradually becoming smaller in association with increase in the battery charge amount, while the phase angles of the DC-AC converter are controlled in a feedback-loop in accordance with the battery charge amount.

2. The idle stop control device according to claim 1, wherein the maximum phase angle (Hmax) during the the charging reinforcing control is increased compared to the maximum phase angle (Umax) during the normal power generation.

3. The idle stop control device according to claim 2, wherein an increasing ratio (C) of said maximum phase angle (Hmax) applied for said charging reinforcing control is set between 15 and 35% above the phase angle (Umax) of normal power generation.

4. The idle stop control device according to claim 1 to 3, wherein when it is determined that stopping the engine by said idle stop control is not suitable based on the charge state detected by said charge state detecting means (41), a warning is given to the driver.

## Patentansprüche

1. Leerlaufstoppsteuervorrichtung, umfassend:
einen Dynamo (18) zum Erzeugen von Elektrizität durch eine Rotationsantriebskraft eines Motors (14);
eine Batterie (19), die durch die von dem Dynamo (18) erzeugte Elektrizität geladen wird;
ein Ladungssteuermittel (46) zum Erhöhen und Verringern einer Energieerzeugungsmenge des Dynamos (18) gemäß einem Ladezustand der Batterie (19);
ein Leerlaufstoppsteuermittel (45) zum Stoppen des Motors (14a), wenn eine vorbestimmte Motorstoppbedingung erfüllt ist;
ein Ladezustandserfassungsmittel (41) zum Erfassen des Ladezustands der Batterie (19);
wobei, wenn festgestellt wird, dass das Anhalten des Motors durch die Leerlaufstoppsteuer auf der Grundlage des von dem Ladungszustandserfassungsmittel (41) erfassten Ladezustands nicht geeignet ist, die Energieerzeugungsmenge des Dynamos (18) durch das Ladungssteuersmittel (46) in einer Ladungsverstärkungssteuer erhöht wird,
**dadurch gekennzeichnet, dass**
der Dynamo (18) ein dreiphasiger bürstenloser Motor ist, der eine Ausgangssteuereinheit (76) aufweist, die mit einem Gleichstrom-Wechselstrom-Wandler (75) versehen ist, der MOS-FETs (Q1-Q6) enthält, die über eine Antriebsschaltung (78) gesteuert werden, und
wobei bei der Ladungsverstärkungssteuer das Ladungssteuermittel (46) die Erregungszeitpunkte der MOS-FETs (Q1-Q6) mit der Antriebsschaltung (78) des Dynamos (18) steuert, indem sie die Phasenwinkel des Gleichstrom-Wechselstrom-Wandlers im Vergleich zum Normalbetrieb verzögert,
wobei die Leerlaufsteuervorrichtung ferner umfassend:
ein Drosselklappenbetätigungselement (5), das von einem Fahrer betätigt wird, um den Ausgang des Motors (14a) einzustellen; und
ein Motorausgangssteuermittel(47) zum Steuern des Ausgangs des Motors (14a) gemäß einem Betätigungsbetrag des Drosselklappenbetätigungselements (5), bei dem
das Motorausgangssteuermittel (47) eine Ausgangserhöhungssteuer ausführt, um den verringerten Ausgang während der Ladungsverstärkungssteuer zu kompensieren, indem ein Öffnungsgrad der Drosselklappe (63) mehr als üblich in Bezug auf den Betriebsbetrag des Drosselklappenbetätigungselements (5) erhöht wird, um zu verhindern, dass die Fahrbarkeit als Reaktion auf die Ausführung der Ladungsverstärkungssteuer zur Erhöhung des Leistungserzeugungsbetrags des Dynamos durch das Ladesteuermittel (46) verschlechtert wird,
wobei die Ausgangserhöhungssteuer in Verbindung mit der Ladungsverstärkungssteuer ausgeführt wird, wobei ein Korrekturbetrag des Drosselklappenöffnungsgrads in Verbindung mit einer Erhöhung der Batterieladungsmenge allmählich kleiner wird, während die Phasenwinkel des Gleichstrom-Wechselstrom-Wandlers in einer Rückkopplungsschleife gemäß der Batterieladungsmenge gesteuert werden.

2. Leerlaufstoppsteuervorrichtung nach Anspruch 1, wobei der maximale Phasenwinkel (Hmax) während des Steuerns der Ladungsverstärkung im Vergleich zu dem maximalen Phasenwinkel (Umax) während der normalen Stromerzeugung erhöht ist.

3. Leerlaufstoppsteuervorrichtung nach Anspruch 2, wobei ein Erhöhungsverhältnis (C) des maximalen Phasenwinkels (Hmax), der für die Ladungsverstärkungssteuer angewendet wird, zwischen 15 und 35 % über dem Phasenwinkel (Umax) der normalen Stromerzeugung eingestellt ist.

4. Leerlaufstoppsteuervorrichtung nach einem der Ansprüche 1 bis 3, wobei eine Warnung an den Fahrer ausgegeben wird, wenn festgestellt wird, dass das Anhalten des Motors durch die Leerlaufstoppsteuer auf der Grundlage des von des Ladungszustandserfassungsmittels (41) erfassten Ladezustands nicht geeignet ist.

## Revendications

1. Dispositif de commande d'arrêt au ralenti comprenant :
une dynamo (18) pour générer de l'électricité par une force d'entraînement de rotation d'un moteur (14) ;
une batterie (19) chargée par l'électricité générée de ladite dynamo (18) ;
des moyens de commande de charge (46) pour augmenter et réduire une quantité de génération de puissance de ladite dynamo (18) en fonction d'un état de charge de ladite batterie (19) ;
des moyens de commande d'arrêt au ralenti (45) pour arrêter ledit moteur (14a) si une condition d'arrêt de moteur prédéterminée est satisfaite ;
des moyens de détection d'état de charge (41) pour détecter ledit état de charge de ladite batterie (19) ;
dans lequel, s'il est déterminé qu'un arrêt du moteur par ladite commande d'arrêt au ralenti n'est pas approprié sur la base de l'état de charge détecté par lesdits moyens de détection d'état de charge (41), la quantité de génération de puissance de ladite dynamo (18) est augmentée par lesdits moyens de commande de charge (46) dans une commande de renforcement de charge,
**caractérisé en ce que**
ladite dynamo (18) est un moteur triphasé sans balai, présentant une unité de commande de sortie (76) dotée d'un convertisseur CC-CA (75) comportant des MOS-FET (Q1-Q6) commandés par l'intermédiaire d'un circuit d'entraînement (78), et
dans lequel, dans ladite commande de renforcement de charge, lesdits moyens de commande de charge (46) commandent les synchronisations de mise sous tension des MOS-FET (Q1-Q6) avec ledit circuit d'entraînement (78) de ladite dynamo (18) en retardant les angles de phase du convertisseur CC-CA par rapport à un fonctionnement normal,
ledit dispositif de commande d'arrêt au ralenti comprenant en outre :
un élément d'actionnement de papillon des gaz (5) qui est actionné par un conducteur pour ajuster une sortie dudit moteur (14a) ; et
des moyens de commande de sortie de moteur (47) pour commander ladite sortie dudit moteur (14a) en fonction d'une quantité d'actionnement dudit élément d'actionnement de papillon des gaz (5), dans lequel
lesdits moyens de commande de sortie de moteur (47) exécutent une commande d'augmentation de sortie pour compenser la sortie réduite au cours de ladite commande de renforcement de charge par l'augmentation d'un degré d'ouverture du papillon des gaz (63) de plus que d'habitude par rapport à la quantité d'actionnement dudit élément d'actionnement de papillon des gaz (5) afin d'empêcher toute détérioration de la maniabilité en réponse à l'exécution d'une commande de renforcement de charge pour l'augmentation de la quantité de génération de puissance de la dynamo par lesdits moyens de commande de charges (46),
dans lequel ladite commande d'augmentation de sortie est exécutée en relation avec ladite commande de renforcement de charge, une quantité de correction dudit degré d'ouverture de papillon des gaz diminuant progressivement au fur et à mesure d'une augmentation de la quantité de charge de batterie, pendant que les angles de phase du convertisseur CC-CA sont commandés dans une boucle de rétroaction en fonction de la quantité de charge de batterie.

2. Dispositif de commande d'arrêt au ralenti selon la revendication 1, dans lequel l'angle de phase maximal (Hmax) au cours de la commande de renforcement de charge est augmenté par rapport à l'angle de phase maximal (Umax) au cours de la génération de puissance normale.

3. Dispositif de commande d'arrêt au ralenti selon la revendication 2, dans lequel un taux d'augmentation (C) dudit angle de phase maximal (Hmax) appliqué pour ladite commande de renforcement de charge est réglé entre 15 et 35 % au-dessus de l'angle de phase (Umax) de génération de puissance normale.

4. Dispositif de commande d'arrêt au ralenti selon les revendications 1 à 3, dans lequel, lorsqu'il est déterminé qu'un arrêt du moteur par ladite commande d'arrêt au ralenti n'est pas approprié sur la base de l'état de charge détecté par lesdits moyens de détection d'état de charge (41), un avertissement est donné au conducteur.
